# EUROPEAN PATENT APPLICATION

(11) **EP 4 258 383 A1**
(43) Date of publication of application: **11.10.2023**
(21) Application number: 22902504.4
(22) Date of filing: 23.02.2022
(51) Int. Cl.: H01M 4/36, H01M 4/13

(54) **POSITIVE ELECTRODE SHEET, SECONDARY BATTERY, BATTERY MODULE, BATTERY PACK, ELECTRIC DEVICE, AND METHOD FOR BALANCING INTERNAL VOLTAGE DIFFERENCE OF BATTERY**

(71) Applicant: Contemporary Amperex Technology Co., Limited, Ningde City, Fujian 352100 (CN)
(72) Inventor: WU, Yiyang, Ningde City, Fujian 352100 (CN); YE, Yonghuang, Ningde City, Fujian 352100 (CN); WU, Baozhen, Ningde City, Fujian 352100 (CN); WU, Kai, Ningde City, Fujian 352100 (CN)
(74) Representative: Rowlands, Stuart Michael
(86) International application number: PCT/CN2022/077451
(87) International publication number: WO 2023/159385

(57) **Abstract**

The present application provides a positive electrode plate, comprising at least the following materials: a first active material selected from a lithium iron phosphate-based material represented by a formula LiFe₁₋ₓMnₓPO₄, wherein x is between 0-0.8, optionally between 0-0.5, and more optionally between 0-0.25; and a second active material selected from one or more of lithium nickelate, lithium manganate, lithium cobaltate, lithium nickel cobalt manganate, lithium nickel cobalt aluminate, a lithium-rich manganese base, and lithium vanadium phosphate; wherein the amount of the second active material used accounts for, by mass, 10-70%, optionally 10-30%, and more optionally 15-20%, on the basis of the total mass of the first active material and the second active material. The present application further provides a secondary battery comprising the positive electrode plate, and a battery module, a battery pack and a power consuming device associated therewith. The present application further provides a method for balancing an internal voltage difference of a secondary battery.

## Description

### Technical Field

The present application relates to the technical field of lithium batteries, and in particular to a positive electrode plate and an associated preparation method therefor, a battery module, a battery pack, and a power consuming device. The present application further relates to a method for balancing an internal voltage difference of a secondary battery.

### Background Art

In recent years, with the increasingly wide application range of lithium-ion batteries, lithium-ion batteries are widely used in energy storage power systems such as hydroelectric, thermal, wind and solar power stations, as well as power tools, electric bicycles, electric motorcycles, electric vehicles, military equipment, aerospace and other fields. In the lithium-ion batteries, lithium iron phosphate batteries have attracted people's attention due to their properties such as large capacity, good safety, long service life and low cost. However, problems such as inaccurate display of remaining power and rapid capacity fading often occur during the use of the lithium iron phosphate batteries, seriously affecting the user experience. Therefore, it is significant to provide a secondary battery having a good capacity retention performance and capable of accurately displaying remaining power.

### Summary of the Invention

In view of the above-mentioned problems, an objective of the present application is to provide a positive electrode plate, which allows a secondary battery using the positive electrode plate has a good capacity retention performance; also, the secondary battery using the positive electrode plate is capable of accurately displaying remaining power of the secondary battery and improving the user experience.

In order to achieve the above objective, the present application provides a positive electrode plate and a secondary battery comprising the positive electrode plate, a battery module, a battery pack, and a power consuming device. In addition, the present application further provides a method of balancing an internal voltage difference of a secondary battery.

A first aspect of the present application provides a positive electrode plate, comprising at least the following materials:
a first active material selected from a lithium iron phosphate-based material represented by a formula LiFe₁₋ₓMnₓPO₄, wherein x is between 0-0.8, optionally between 0-0.5, and more optionally between 0-0.25; and
a second active material selected from one or more of lithium nickelate, lithium manganate, lithium cobaltate, lithium nickel cobalt manganate, lithium nickel cobalt aluminate, a lithium-rich manganese base, and lithium vanadium phosphate;
wherein the amount of the second active material used accounts for, by mass, 10-70%, optionally 10-30%, and more optionally 15-20%, on the basis of the total mass of the first active material and the second active material.

The secondary battery using the positive electrode plate of the present application has a good voltage self-balancing performance and thus an improved capacity retention performance, and is capable of accurately displaying remaining power of the secondary battery and improving the user experience.

In any embodiment, optionally, the amount of the first active material used accounts for, by mass, 30-90%, optionally 70-90%, and more optionally 80-85%, on the basis of the total mass of the first active material and the second active material.

In any embodiment, optionally, the mass ratio of the first active material to the second active material is between 3 : 7 and 9 : 1, optionally, 7 : 3 and 9 : 1, and more optionally, 80 : 20 and 85 : 15.

When the mass ratio of the first active material to the second active material is within the above range, it is conductive to improving the voltage self-balancing performance of the secondary battery using the positive electrode plate of the present application.

In any embodiment, optionally, the first active material is lithium iron phosphate, lithium iron manganese phosphate, or a mixture of lithium iron phosphate and lithium iron manganese phosphate.

In any embodiment, optionally, the second active material comprises at least one of nickel cobalt lithium manganate and nickel cobalt lithium aluminate.

In any embodiment, optionally, the geometric center of the distribution of a first active material is not higher than the geometric center of the distribution of a second active material in a thickness direction of the positive electrode plate.

When the geometric center of the distribution of the first active material and the geometric center of the distribution of the second active material correspond to the above condition, the charge polarization of the secondary battery using the positive electrode plate of the present application can be reduced, and the heat generation and temperature rise of the secondary battery can then be reduced, such that the safety performance of the battery is improved, and the service life of the battery is prolonged.

In any embodiment, optionally, the geometric center of the distribution of the first active material coincides with the geometric center of the distribution of the second active material in the thickness direction of the positive electrode plate; or the geometric center of the distribution of the first active material is below the geometric center of the distribution of the second active material.

A second aspect of the present application provides a method for balancing an internal voltage difference of a secondary battery, wherein a positive electrode plate comprising at least the following materials is used:
a first active material selected from a lithium iron phosphate-based material represented by a formula LiFe₁₋ₓMnₓPO₄, wherein x is between 0-0.8, optionally between 0-0.5, and more optionally between 0-0.25; and
a second active material selected from one or more of lithium nickelate, lithium manganate, lithium cobaltate, lithium nickel cobalt manganate, lithium nickel cobalt aluminate, a lithium-rich manganese base, and lithium vanadium phosphate;
wherein the amount of the second active material used accounts for, by mass, 10-70%, optionally 10-30%, and more optionally 15-20%, on the basis of the total mass of the first active material and the second active material.

A third aspect of the present application provides a secondary battery, comprising the positive electrode plate in the first aspect of the present application. The secondary battery can be prepared by a preparation method for a secondary battery generally used in the art. In any embodiment, optionally, in a charge voltage curve of the secondary battery, a voltage value V1 at a position corresponding to a 85% state of charge and a voltage value V2 at a position corresponding to a 60% state of charge satisfy: V1 - V2 ≥ 0.15 V.

When V1 and V2 satisfy the above-mentioned relational expression, it is conductive to ensuring that the secondary battery has a good voltage self-balancing performance, thereby improving the capacity retention performance of the secondary battery while accurately displaying the remaining power of the secondary battery.

A fourth aspect of the present application provides a battery module, comprising a secondary battery in the third aspect of the present application. The battery module can be prepared using a method for prepared a battery module generally used in the art.

A fifth aspect of the present application provides a battery pack, comprising the battery module in the fourth aspect of the present application. The battery pack can be prepared by a method for preparing a battery pack generally used in the art.

A sixth aspect of the present application provides a power consuming device, comprising at least one of the secondary battery in the third aspect of the present application, the battery module in the fourth aspect of the present application, or the battery pack in the fifth aspect of the present application.

### [Advantageous effects]

In the secondary battery of the present application, the positive electrode plate comprises the first active material and the second active material, and the organic combination of the two active materials enables the secondary battery to have a good voltage self-balancing performance and to adjust the difference of the state of charge (SOC) in the electrode plate by itself, such that the capacity retention performance of the secondary battery can be improved; and since the voltage and the SOC are in a good one-to-one correspondence, the remaining power can be accurately displayed by means of voltage monitoring, such that the user experience is improved.

The battery module, the battery pack and the power consuming device of the present application comprise the secondary battery provided by the present application, and thus have at least the same advantages as the secondary battery.

### Brief Description of the Drawings

Fig. 1 is a schematic diagram illustrating that a geometric center A of a first active material coincides with a geometric center B of a second active material (Fig. 1-1) and the geometric center A is below the geometric center B (Fig. 1-2).
Fig. 2 shows charge curves for lithium iron phosphate (LFP) (Fig. 2-1) and lithium nickel cobalt manganate (NCM) (Fig. 2-2). The charge curve for the LFP is gentler, the charge curve for the NCM is steeper, and the voltage and the SOC are in a good one-to-one correspondence.
Fig. 3 is a schematic diagram illustrating a battery cell 1 and a battery cell 2 in parallel connection.
Fig. 4 is a graph illustrating SOC differences increasing with the SOC of the battery cell 1 and the battery cell 2 according to an LFP system (left column) and an NCM523 system (i.e., LiNi_{0.5}Co_{0.2}Mn_{0.3}O₂) (right column).
Fig. 5 is a schematic diagram of a secondary battery according to an embodiment of the present application.
Fig. 6 is an exploded view of the secondary battery according to an embodiment of the present application shown in Fig. 5.
Fig. 7 is a schematic diagram of a battery module according to an embodiment of the present application.
Fig. 8 is a schematic diagram of a battery pack according to an embodiment of the present application.
Fig. 9 is an exploded view of the battery pack according to an embodiment of the present application shown in Fig. 8.
Fig. 10 is a schematic diagram of a power consuming device using a secondary battery as a power source according to an embodiment of the present application.

List of reference signs:
1 battery pack; 2 upper case; 3 lower case; 4 battery module; 5 secondary battery; 51 housing; 52 electrode assembly; 53 cover plate

### Detailed Description of Embodiments

Embodiments of a positive electrode plate and a manufacturing method therefor, a secondary battery, a battery module, a battery pack, and a power consuming device of the present application will be described in detail below with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined thus may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

It should be noted that those skilled in the art will understand that the term "lithium-rich manganese-based" used herein means a lithium-rich maganese-based material commonly used in the art, which contains two components Li₂MnO₃ and LiMnO₂, and its chemical formula may be abbreviated as xLiMO₂·(1-x)Li₂MnO₃, where 0 < x < 1.

It should be noted that, in the present application, the term "voltage self-balance" means that voltage differences at different regions in an electrode assembly inside a battery unit due to different state-of-charge distributions are automatically balanced during the use of a secondary battery prepared. Good "voltage self-balancing" performance is beneficial to improving the capacity retention performance of the secondary battery, improving the safety of the secondary battery and prolonging lthe service ife of the secondary battery.

It should be noted that, in the present application, the term "geometric center" refers to the geometric center of a distribution position of an active material in a thickness direction of an electrode plate. For example, the geometric center of a distribution position of a first active material in the thickness direction of the electrode plate is indicated as geometric center A, and the geometric center of a distribution position of a second active material in the thickness direction of the electrode plate is indicated as geometric center B.

The inventors of the present application have found in practical operations that: problems such as inaccurate display of remaining power and rapid capacity fading often occur during the use of a lithium iron phosphate secondary battery, seriously affecting the user experience. Unexpectedly, the inventors have found after a number of attempts that the above-mentioned problems can be effectively alleviated by adding a second active material to a lithium iron phosphate positive electrode plate.

### [Positive electrode plate]

A first aspect of the present application provides a positive electrode plate, comprising at least the following materials:
a first active material selected from a lithium iron phosphate-based material represented by a formula LiFe₁₋ₓMnₓPO₄, wherein x is between 0-0.8, optionally between 0-0.5, and more optionally between 0-0.25; and
a second active material selected from one or more of lithium nickelate, lithium manganate, lithium cobaltate, lithium nickel cobalt manganate, lithium nickel cobalt aluminate, a lithium-rich manganese base, and lithium vanadium phosphate;
wherein the amount of the second active material used accounts for, by mass, 10-70%, optionally 10-30%, and more optionally 15-20%, on the basis of the total mass of the first active material and the second active material.

The positive electrode plate of the present application includes the first active material and the second active material, and the organic combination of the two active materials enables the secondary battery to have a good voltage self-balancing performance and to adjust the difference of the SOC in the electrode plate by itself, such that the capacity retention performance of the secondary battery can be improved; and moreover, since the voltage and the SOC are in a good one-to-one correspondence, remaining power can be accurately displayed by means of voltage monitoring, which improves the user experience

In the positive electrode plate of the present application, the first active material is selected from a lithium iron phosphate based material represented by a formula LiFe₁₋ₓMnₓPO₄, where x between 0-0.8, optionally between 0-0.5, and more optionally between 0-0.25. For example, x may be selected from 0, 0.1, 0.2, 0.25, 0.3, 0.4, 0.5, 0.6, 0.7, 0.8, etc.

In the positive electrode plate of the present application, the second active material is selected from one or more of lithium nickelate, lithium manganate, lithium cobaltate, lithium nickel cobalt manganate, lithium nickel cobalt aluminate, a lithium-rich manganese base, and lithium vanadium phosphate. For example, the second active material may be lithium nickel cobalt manganate, a mixture of lithium nickel cobalt manganate and lithium nickel cobalt aluminate, or a mixture of lithium nickel cobalt manganate, lithium nickel cobalt aluminate and lithium vanadium phosphate.

In the positive electrode plate of the present application, the use of the second active material used accounts for, by mass, 10-70%, optionally 10-30%, and more optionally 15-20%, on the basis of the total mass of the first active material and the second active material. For example, the amount of the second active material used may be 10%, 15%, 20%, 30%, 40%, 50%, 60% or 70%, and optionally 15% or 20%.

When the amount of the second active material used is within the above-mentioned range, it is possible to ensure that the prepared positive electrode plate has a good voltage self-balancing performance, the capacity retention performance of the secondary battery using the positive electrode plate of the present application is improved, and the remaining power is accurately displayed.

In addition, since the first active material has a low energy density but has a good high-temperature safety performance while the second active material may have a poor high-temperature safety performance, if an excessive amount of second active material is used, the high-temperature safety performance of the secondary battery may be impaired; On the contrary, if a too less amount of the second active material is used, the secondary battery may have a low energy density.

In some embodiments, optionally, when the second active material comprises lithium nickel cobalt manganate, the minimum content of the lithium nickel cobalt manganate is 5% on the basis of the total mass of the first active material and the second active material, provided that the total amount of the second active material used is within the range defined by the present application.

In some embodiments, optionally, when the second active material comprises lithium nickel cobalt aluminate, the minimum content of the lithium nickel cobalt aluminate is 5% on the basis of the total mass of the first active material and the second active material, provided that the total amount of the second active material used is within the range defined by the present application.

In some embodiments, optionally, the amount of the first active material used accounts for, by mass, 30-90%, optionally 70-90%, and more optionally 80-85%, on the basis of the total mass of the first active material and the second active material.

When the amount of the first active material used is higher than the above-mentioned range, the energy density of the positive electrode plate may be low; and when the amount of the first active material used is lower than the above-mentioned range, the high-temperature safety performance of the secondary battery using the positive electrode plate may be poor. In some embodiments, optionally, the mass ratio of the first active material to the second active material is between 3 : 7 to 9 : 1, optionally between 7 : 3 to 9 : 1, and more optionally between 80 : 20 to 85 : 15.

By organically combining the first active material and the second active material at the above mass ratio, it is possible to make the secondary battery using the positive electrode plate have a good voltage self-balancing performance. In addition, the positive electrode plate comprising the first active material and the second active material at the above mass ratio has a high energy density, and the secondary battery using the positive electrode plate also has an excellent high-temperature performance.

In some embodiments, optionally, the first active material is lithium iron phosphate, lithium iron manganese phosphate, or a mixture of lithium iron phosphate and lithium iron manganese phosphate.

In some embodiments, optionally, the second active material comprises at least one of nickel cobalt lithium manganate and nickel cobalt lithium aluminate.

In some embodiments, optionally, the geometric center of the distribution of a first active material is not higher than the geometric center of the distribution of a second active material in a thickness direction of the positive electrode plate.

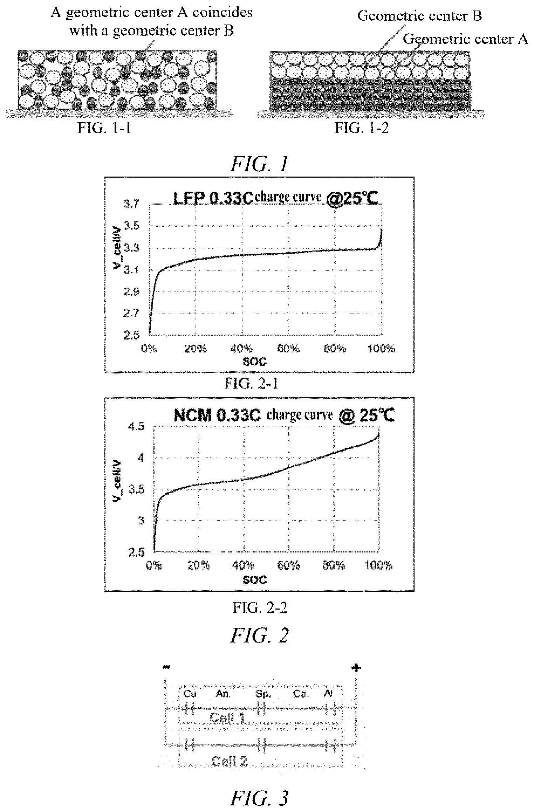

In some embodiments, optionally, the geometric center A of the distribution of the first active material coincides with the geometric center B of the distribution of the second active material in the thickness direction of the positive electrode plate, as shown in Fig. 1-1.

In some embodiments, optionally, the geometric center A of the distribution of the first active material is below the geometric center B of the distribution of the second active material in the thickness direction of the positive electrode plate, as shown in Fig. 1-2. Those skilled in the art will appreciate that a spatial structure design of an electrode plate layer also has a significant effect on the performance of a lithium secondary battery, particularly the design of an electrode plate comprising two or more above active materials. The performance of the battery may be further improved by means of the spatial structure design of the electrode plate. Specifically, in the present application, when the distribution of the geometric center of the first active material and the distribution of the geometric center of the second active material correspond to the above-mentioned condition, particularly when the geometric center A of the distribution of the first active material is below the geometric center B of the distribution of the second active material, the charge polarization of the secondary battery using the positive electrode plate of the present application can be reduced, and the heat generation and temperature rise of the secondary battery can thus be reduced, such that the safety performance of the battery is improved, and the service life of the battery is prolonged.

With regard to the above-mentioned improvement effect, it can be understood that the first active material such as lithium iron phosphate less affected by diffusion is arranged close to a current collector side, which can reduce the distance between the material and the current collector and thus the ohmic polarization during charging; by contrast, the second active material such as lithium nickel cobalt manganate greatly affected by diffusion is arranged away from the current collector side, which can reduce a transmission path of lithium ions and thus the concentration polarization during charging.

As an example, when the first active material is lithium iron phosphate and the second active material is lithium nickel cobalt manganate, for example, if the lithium iron phosphate and the lithium nickel cobalt manganate are distributed by mixig directly physically, the geometric center A of the lithium iron phosphate coincides with the geometric center B of the lithium nickel cobalt manganate. As another example, when the lithium iron phosphate and the lithium nickel cobalt manganate are coated in a two-layer manner, if the lithium iron phosphate is located close to the current collector side and the lithium nickel cobalt manganate is located away from the current collector side, the geometric center A is located below the geometric center B.

Those skilled in the art will appreciate that the positive electrode plate further includes a positive current collector and a positive film layer arranged on at least one surface of the positive current collector, the positive film layer including a positive active material.

In the present application, the relative positions of the geometric centers can be determined by a conventional method known to those skilled in the art. For example, the geometric center A can be determined by analyzing the morphology of a cross section of the electrode plate with a scanning electron microscope and identifying a height interval in which the first active material is distributed according to a particle size; and the geometric center B can be determined according to a height interval in which the second active material is distributed, and the relative positional relationship of the geometric center A and the geometric center B can thus be established. As another example, by performing a surface element analysis on the positive electrode plate, a profile map of characteristic elements of the active material on the cross section can be formed, the height interval in which the first active material is distributed and the height interval in which the second active material is distributed can be established, and the relative positional relationship between the geometric center A and the geometric center B can thus be established.

In the present application, the positive current collector has two surfaces opposite one another in a thickness direction thereof, and the positive film layer is provided on either or both of the two opposite surfaces of the positive current collector.

In some embodiments, the positive current collector can be a metal foil or a composite current collector. For example, as a metal foil, an aluminum foil can be used. The composite current collector may include a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. In some embodiments, the positive film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the mass fraction of the total mass of the first active material and the second active material in the positive electrode plate film layer is not lower than 80%, optionally not lower than 90%, and further optionally not lower than 95%.

In some embodiments, the positive electrode plate can be prepared as follows: dispersing the above-described components for preparing the positive electrode plate, such as a positive active material, a conductive agent, a binder and any other components, in a solvent (e.g., N-methylpyrrolidone) to form a positive slurry; and coating the positive current collector with the positive slurry, followed by the procedures such as drying and cold pressing, so as to obtain the positive electrode plate.

In some embodiments, the positive slurry of the first active material and the positive slurry of the second active material may be separately prepared, the side close to the current collector is coated with the positive slurry of the first active material, and the side away from the current collector is coated with the positive slurry of the second active material.

### [Method]

As described above, the inventors have found in studies that the problems such as the capacity fading and inaccurate display of remaining power often occur in lithium iron phosphate secondary batteries during use. Surprisingly, the above-mentioned problems can be well solved by adding the second active material to the first active material. A possible reason is that, after the second active material is added to the first active material, the secondary battery obtained thus has a good voltage self-balancing performance and is capable of well balancing an internal voltage difference of the secondary battery. Therefore, a second aspect of the present application provides a method for balancing an internal voltage difference of a secondary battery, the method using a positive electrode plate including at least the following materials:
a first active material selected from a lithium iron phosphate-based material represented by a formula LiFe₁₋ₓMnₓPO₄, wherein x is between 0-0.8, optionally between 0-0.5, and more optionally between 0-0.25; and
a second active material selected from one or more of lithium nickelate, lithium manganate, lithium cobaltate, lithium nickel cobalt manganate, lithium nickel cobalt aluminate, a lithium-rich manganese base, and lithium vanadium phosphate;
wherein the amount of the second active material used accounts for, by mass, 10-70%, optionally 10-30%, and more optionally 15-20%, on the basis of the total mass of the first active material and the second active material.

Those skilled in the art will appreciate that in the method described in the second aspect of the present application, the first active material and the second active material may have the meanings described in the section about the positive electrode plate.

The inventors simulated the method of the present application by means of a mathematical physical model. A lithium secondary battery may be regarded as an infinite number of small battery cells connected together in parallel. When the lithium secondary battery is charged, due to the fact that different temperature/stress/electrolyte infiltration and other environmental factors affecting the dynamics at different spatial positions result in dynamics differences during charging, the different battery cells have different charging rates, and the battery cells at different positions have SOC deviations.

As shown in Fig. 3, the battery cell 1 and the battery cell 2 are connected in parallel in the model. The temperature of the battery cell 1 is set at 30°C, the temperature of the battery cell 2 is higher than the temperature of the battery cell 1 (for example, higher than 5°C or 10°C), and the battery cells are charged at different rates (for example, at the charging rates of 1C, 2C, or 4C). The SOC difference between the battery cell 1 and the battery cell 2 is calculated.

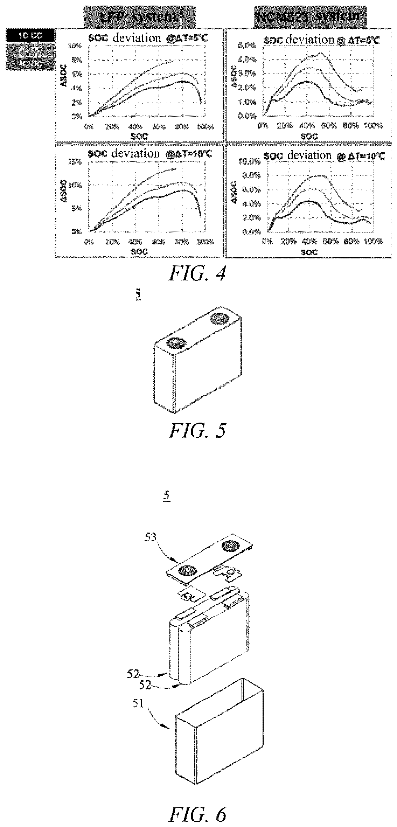

As shown in Fig. 4, for the lithium iron phosphate battery, with the temperature difference and an increase in charging rate, the SOC difference between the battery cell 1 and the battery cell 2 increases, and an inflection point does not occur in the SOC difference between the battery cell 1 and the battery cell 2 until an average SOC during charging reaches 80% SOC or above, indicating that the battery cells have a poor voltage self-balancing performance, and the resulting voltage difference is not enough to adjust the SOC difference. By contrast, for the lithium nickel cobalt manganate battery, when the average SOC during charging reaches about 50% SOC, the SOC difference decreases as the average SOC increases, indicating that the voltage difference between the battery cell 1 and the battery cell 2 causes internal self-balance, and the battery cells can automatically adjust the SOC difference under the effect of the voltage difference. It can be seen therefrom that the voltage self-balancing performance of the secondary battery can be effectively improved by adding the second active material such as lithium nickel cobalt manganate to the first active material such as lithium iron phosphate.

### [Secondary battery]

A third aspect of the present application provides a secondary battery, including the positive electrode plate described in the first aspect of the present application. The secondary battery can be prepared by a method commonly used in the art.

Typically, a secondary battery comprises a positive electrode plate, a negative electrode plate, an electrolyte and a separator. During a charge/discharge process of the battery, active ions are intercalated and de-intercalated back and forth between a positive electrode plate and a negative electrode plate. The electrolyte serves to conduct ions between the positive electrode plate and the negative electrode plate. The separator is arranged between the positive electrode plate and the negative electrode plate, and mainly functions to prevent the positive and negative electrodes from short-circuiting and enables ions to pass through.

In some embodiments, optionally, in a charge voltage curve of the secondary battery of the present application, a voltage value V1 at a position corresponding to a 85% state of charge and a voltage value V2 at a position corresponding to a 60% state of charge satisfy: V1 - V2 ≥ 0.15 V.

When V1 and V2 satisfy the above-mentioned relational expression, the secondary battery has a good voltage self-balancing performance, which is conductive to improving the capacity retention performance of the secondary battery while accurately displaying the remaining power of the secondary battery.

Other components of the secondary battery, such as a negative electrode plate, an electrolyte, and an separator, will be described below.

### [Negative electrode plate]

The negative electrode plate includes a negative current collector and a negative electrode film layer arranged on at least one surface of the negative electrode current collector, the negative electrode film layer including a negative electrode active material.

As an example, the negative current collector has two surfaces opposite one another in its own thickness direction, and the negative film layer is provided on either or both of the two opposite surfaces of the negative current collector.

In some embodiments, the negative current collector can be a metal foil or a composite current collector. For example, as a metal foil, a copper foil can be used. The composite current collector may include a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative active material can be a negative active material known in the art for batteries. As an example, the negative active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative active materials for batteries can also be used. These negative active materials may be used alone or in combination of two or more.

In some embodiments, the negative film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). In some embodiments, the negative film layer may optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative current collector with the negative electrode slurry, followed by procedures such as drying and cold pressing, so as to obtain the negative electrode plate.

### [Electrolyte]

The electrolyte serves to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some implementations, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further includes a separator. The type of the separator is not particularly limited in the present application, and any well known porous-structure separator with good chemical stability and mechanical stability may be selected. In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, the positive electrode plate, the negative electrode plate and the separator can be made into the electrode assembly by a winding process or a lamination process.

In some embodiments, the secondary battery may comprise an outer package. The outer package can be used to encapsulate the above-mentioned electrode assembly and electrolyte. In some implementations, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and the examples of plastics may include polypropylene, polybutylene terephthalate, polybutylene succinate, etc.

A fourth aspect of the present application provides a battery module, including the secondary battery described in the third aspect of the present application.

A fifth aspect of the present application provides a battery pack, including the battery module described in the fourth aspect of the present application.

A sixth aspect of the present application provides a power consuming device, including at least one of the secondary battery in the third aspect of the present application, the battery module in the fourth aspect of the present application or the battery pack in the fifth aspect of the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As for the power consuming device, the secondary battery, battery module or battery pack can be selected according to the usage requirements thereof.

In addition, the secondary battery, battery module, battery pack, and power consuming device of the present application will be described below by appropriately referring to the accompanying drawings.

The shape of the secondary battery is not particularly limited in the present application, and may be cylindrical, square or of any other shape. For example, Fig. 5 illustrates the secondary battery 5 having a square structure as an example.

In some embodiments, referring to Fig. 6, the outer package may include a housing 51 and a cover plate 53. Herein, the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. A positive electrode plate, a negative electrode plate and a separator can be subjected to a winding process or a stacking process to form an electrode assembly 52. The electrode assembly 52 is encapsulated in the accommodating cavity. The electrolyte is infiltrated into the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

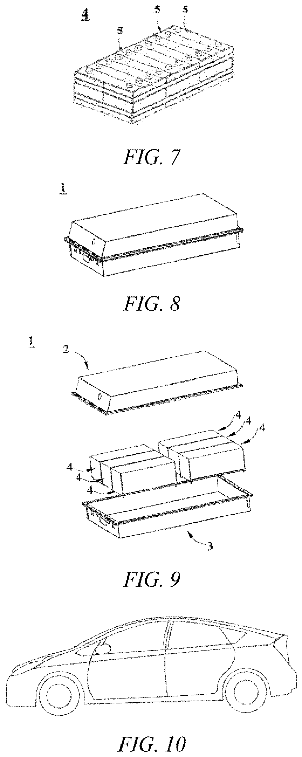

Fig. 7 shows a battery module 4 as an example. Referring to Fig. 7, in the battery module 4, a plurality of secondary batteries 5 may be arranged in sequence in the length direction of the battery module 4. Of course, the secondary batteries may also be arranged in any other manner. Furthermore, the plurality of secondary batteries 5 may be fixed by fasteners.

Optionally, the battery module 4 may further comprise a housing with an accommodating space in which and the plurality of secondary batteries 5 are accommodated.

In some embodiments, the above battery module may also be assembled into a battery pack, the number of the battery modules contained in the battery pack may be one or more, and the specific number can be selected by those skilled in the art according to the application and capacity of the battery pack.

Fig. 8 and Fig. 9 show a battery pack 1 as an example. Referring to Fig. 8 and Fig. 9, the battery pack 1 may comprise a battery case and a plurality of battery modules 4 provided in the battery case. The battery case comprises an upper case 2 and a lower case 3, wherein the upper case 2 can cover the lower case 3 to form a closed space for accommodating the battery modules 4. The plurality of battery modules 4 may be arranged inside the battery case in any manner.

Fig. 10 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used. As another example, the power consuming device may be a mobile phone, a tablet computer, a laptop computer, etc. It is generally required that the power consuming device is thin and light, and the secondary battery may be used as a power source.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

The positive active materials involved in the examples of the present application are shown in the following table:

| Name | Specification |
|---|---|
| Lithium iron phosphate | Capacity per gram 141 mAh/g |
| NCM523 (i.e., LiNi_{0.5}Co_{0.2}Mno.₃O₂) | Capacity per gram 170 mAh/g |
| NCA (i.e., LiNi_{0.8}Co_{0.15}Al_{0.05}O₂) | Capacity per gram 180 mAh/g |

### Example 1

### Preparation of positive electrode plate

The first active material lithium iron phosphate (calculated as LiFePO₄), the second active material lithium nickel cobalt manganate (NCM523, i.e., LiNi_{0.5}Co_{0.2}Mn_{0.3}O₂), the binder polyvinylidene fluoride, and the conductive agent acetylene black are mixed by the weight ratio of 28.8 : 67.2 : 2 : 2, N-methylpyrrolidone (NMP) is then added as a solvent, they are stirred under the action of a vacuum stirrer until the system is homogeneous, and the positive slurry with a solid content of 75% by weight is obtained; one surface of an aluminum foil having a thickness of 13 µm is uniformly coated with the positive slurry according to a coating density of 19.6 mg/cm²; the positive electrode plate of example 1 is obtained by means of drying, cold pressing and cutting.

### Preparation of negative electrode plate

The negative active material artificial graphite, the conductive agent acetylene black, the binder styrene butadiene rubber (SBR) and the thickener sodium carboxymethyl cellulose (CMC-Na) are dissolved in the solvent deionized water by a weight ratio of 96 : 1 : 2 : 1 and stirred and mixed uniformly, and the negative electrode slurry is prepared. The negative current collector copper foil is uniformly coated with the negative slurry with a coating density of 9.7 mg/cm², which is dried, cold-pressed and cut to obtain the negative electrode plate.

### Electrolyte

In an argon atmosphere glove box (H₂O < 0.1 ppm, and O₂ < 0.1 ppm), the organic solvent ethylene carbonate (EC)/ethyl methyl carbonate (EMC) is mixed uniformly by a volume ratio of 3/7, and 12.5% (on the basis of the weight of the ethylene carbonate/ethyl methyl carbonate solvent) by weight of LiPF₆ is dissolved in the above organic solvent and stirred uniformly to obtain the electrolyte.

### Separator

A commercially available PP-PE copolymer microporous film having a thickness of 20 µm and an average pore size of 80 nm (Model 20, from Zhuogao Electronic Technology Co. Ltd.) is used.

### Secondary battery

The positive electrode plate, the separator and the negative electrode plate are stacked in sequence, such that the separator is arranged between a positive electrode and a negative electrode to provide the function of isolation, and are wound to obtain a bare cell. The bare cell is placed in an outer package, is filled with the above-mentioned electrolyte, and is encapsulated to obtain the secondary battery.

### Examples 2-8

Other conditions of examples 2-8 are the same as those of example 1, except that the weight ratios of the first positive active material lithium iron phosphate (calculated as LiFePO₄), the second positive active material lithium nickel cobalt manganate (NCM523, i.e., LiNi_{0.5}Co_{0.2}Mn_{0.3}O₂), the binder polyvinylidene fluoride, and the conductive agent acetylene black are 38.4 : 57.6 : 2 : 2, 48 : 48 : 2 : 2, 57.6 : 38.4 : 2 : 2, 67.2 : 28.8 : 2 : 2, 76.8 : 19.2 : 2 : 2, 81.6 : 14.4 : 2 : 2 and 86.4 : 9.6 : 2 : 2 respectively, and the coating densities are 19.9 mg/cm², 20.1 mg/cm², 20.4 mg/cm², 20.7 mg/cm², 20.9 mg/cm², 21.1 mg/cm² and 21.2 mg/cm² respectively during the preparation of the positive electrode plate.

### Example 9

Other conditions of example 9 are the same as those of example 6, except that the second positive active material, lithium nickel cobalt manganate (NCM523, i.e., LiNi_{0.5}Co_{0.2}Mn_{0.3}O₂), is replaced with NCA (i.e., LiNi_{0.8}Co_{0.15}Al_{0.05}O₂) having the same mass.

### Comparative examples 1 and 2

Other conditions of comparative examples 1 and 2 are the same as those of example 1, except that the weight ratios of the first positive active material lithium iron phosphate (calculated as LiFePO₄), the second positive active material lithium nickel cobalt manganate (NCM523, i.e., LiNi_{0.5}Co_{0.2}Mn_{0.3}O₂), the binder polyvinylidene fluoride, the conductive agent acetylene black are 91.2 : 4.8 : 2 : 2 and 96 : 0 : 2 : 2 respectively, and the coating densities are 21.4 mg/cm² and 21.5 mg/cm² respectively during the preparation of the positive electrode plate.

### Measurement method for associated parameters

### 1. Geometric center measurement of first active material and second active material

An appropriate amount of the positive electrode plate sample is taken and subjected to surface element analysis by means of a scanning electron microscope to form a profile map of characteristic elements of the active materials on a cross section. The height interval in which the first active material is distributed and the height interval in which the second active material is distributed are established, so as to determine the relative positions of the geometric center of the distribution of the first active material and the geometric center of the distribution of the second active material.

### 2. Voltage curve measurement of secondary battery

Assuming that the corresponding upper and lower limits of the operating voltage of the secondary battery to be measured at 25°C are respectively represented by Vmax and Vmin, and the nominal capacity is C0 Ah, the measurement method is as follows: placing the secondary battery to be measured in constant-temperature measurement environment at 25°C for 2 hours; discharging the battery with a constant current of 0.33 C0 to the lower limit voltage Vmin; standing for 30 minutes; and charging the battery with a constant current of 1 C0 to the upper limit voltage Vmax and switching to constant-voltage charging until the current decreases to 0.05 C0. All capacities obtained during the charging process correspond to the capacities from 0% SOC to 100% SOC. The voltage curve of the secondary battery can be obtained by drawing with SOC% as the abscissa and a corresponding voltage during the constant-current charging as the ordinate.

In the interval of 15-97% SOC of the obtained voltage curve, when the SOC increases by 5% and the voltage increases by more than 0.2 V, a corresponding minimum starting SOC position is a voltage rise position.

### 3. Fast charge cycling life/number of cycles at 25°C

In the present application, the capacity retention performance of the secondary battery is evaluated based on the fast charge cycling life/number of cycles 25°C.

The lithium ion batteries prepared in examples and comparative examples are charged at a rate of 2 C and discharged at a rate of 1 C at 25°C, and are subjected to a continuous cycle test in the interval of 3%-97% SOC until the capacities of the lithium ion batteries are less than 80% of the initial capacity, and the number of cycles is recorded as cycling performance.

Associated parameters and test results of the examples 1-9 and comparative examples 1 and 2 described above are shown in Table 1 below.

**Table 1: Associated parameters and test results of examples 1-9 and comparative examples 1 and 2**

| No. | First active material | Second active material | Mass percentage of first active material | Mass percentage of second active material | SOC corresponding to voltage rise position | Fast charge cycling life/number of cycles at 25°C |
|---|---|---|---|---|---|---|
| Example 1 | LiFePO₄ | NCM523 | 30% | 70% | 22% | 2000 |
| Example 2 | LiFePO₄ | NCM523 | 40% | 60% | 32% | 2250 |
| Example 3 | LiFePO₄ | NCM523 | 50% | 50% | 42% | 2400 |
| Example 4 | LiFePO₄ | NCM523 | 60% | 40% | 52% | 2650 |
| Example 5 | LiFePO₄ | NCM523 | 70% | 30% | 62% | 2800 |
| Example 6 | LiFePO₄ | NCM523 | 80% | 20% | 73% | 3200 |
| Example 7 | LiFePO₄ | NCM523 | 85% | 15% | 78% | 3000 |
| Example 8 | LiFePO₄ | NCM523 | 90% | 10% | 84% | 2800 |
| Example 9 | LiFePO₄ | NCA | 80% | 20% | 70% | 3050 |
| Comparative example 1 | LiFePO₄ | NCM523 | 95% | 5% | 89% | 1750 |
| Comparative example 2 | LiFePO₄ | NCM523 | 100% | 0% | 95% | 1500 |

As shown in Table 1, the secondary batteries prepared by adding the second active material all have better fast charge cycling life/number of cycles 25°C than those of the comparative example 2 using only the first active material. In addition, the self-balancing performance and the capacity retention performance of corresponding batteries can be further improved by further adjusting the amounts of the first active material and the second active material used, and the mass ratio thereof.

It should be noted that the present application is not limited to the above embodiments. The above embodiments are exemplary only, and any embodiment that has substantially same constitutions as the technical ideas and has the same effects within the scope of the technical solutions of the present application falls within the technical scope of the present application. Furthermore, various modifications to the embodiments that can be conceived by those skilled in the art, and other implementations constructed by combining some of the constituent elements of the embodiments also fall within the scope of the present application without departing from the spirit of the present application.

## Claims

1. A positive electrode plate, comprising at least the following materials:
a first active material selected from a lithium iron phosphate-based material represented by a formula LiFe₁₋ₓMnₓPO₄, wherein x is between 0-0.8, optionally between 0-0.5, and more optionally between 0-0.25; and
a second active material selected from one or more of lithium nickelate, lithium manganate, lithium cobaltate, lithium nickel cobalt manganate, lithium nickel cobalt aluminate, a lithium-rich manganese base, and lithium vanadium phosphate;
wherein the amount of the second active material used accounts for, by mass, 10-70%, optionally 10-30%, and more optionally 15-20%, on the basis of the total mass of the first active material and the second active material.

2. The positive electrode plate according to claim 1, wherein the amount of the first active material used accounts for, by mass, 30-90%, optionally 70-90%, and more optionally 80-85%, on the basis of the total mass of the first active material and the second active material.

3. The positive electrode plate according to claim 1 or 2, wherein the mass ratio of the first active material to the second active material is between 3 : 7 and 9 : 1, optionally, 7 : 3 and 9 : 1, and more optionally, 80 : 20 and 85 : 15.

4. The positive electrode plate according to any one of claim 1-3, wherein the first active material is lithium iron phosphate, lithium iron manganese phosphate, or a mixture of lithium iron phosphate and lithium iron manganese phosphate.

5. The positive electrode plate according to any one of claim 1-4, wherein the second active material comprises at least one of nickel cobalt lithium manganate and nickel cobalt lithium aluminate.

6. The positive electrode plate according to any one of claim 1-5, wherein
the geometric center of the distribution of the first active material is not higher than the geometric center of the distribution of the second active material in a thickness direction of the positive electrode plate.

7. The positive electrode plate according to any one of claims 1-6, wherein
the geometric center of the distribution of the first active material coincides with the geometric center of the distribution of the second active material in the thickness direction of the positive electrode plate; or
the geometric center of the distribution of the first active material is below the geometric center of the distribution of the second active material.

8. A method for balancing an internal voltage difference of a secondary battery, wherein a positive electrode plate comprising at least the following materials is used:
a first active material selected from a lithium iron phosphate-based material represented by a formula LiFe₁₋ₓMnₓPO₄, wherein x is between 0-0.8, optionally between 0-0.5, and more optionally between 0-0.25; and
a second active material selected from one or more of lithium nickelate, lithium manganate, lithium cobaltate, lithium nickel cobalt manganate, lithium nickel cobalt aluminate, a lithium-rich manganese base, and lithium vanadium phosphate;
wherein the amount of the second active material used accounts for, by mass, 10-70%, optionally 10-30%, and more optionally 15-20%, on the basis of the total mass of the first active material and the second active material.

9. A secondary battery, comprising a positive electrode plate according to any one of claims 1-7.

10. The secondary battery according to claim 9, wherein
in a charge voltage curve of the secondary battery, a voltage value V1 at a position corresponding to a 85% state of charge and a voltage value V2 at a position corresponding to a 60% state of charge satisfy the relational expression: V1 - V2 ≥ 0.15 V.

11. A battery module, comprising a secondary battery according to claim 9 or 10.

12. A battery pack, comprising a battery module according to claim 11.

13. A power consuming device, comprising at least one of a secondary battery according to claim 9 or 10, a battery module according to claim 11, and a battery pack according to claim 12.
